(19) Europäisches Patentamt
European Patent Office
Office européen des brevets

(11) **EP 1 562 023 B1**

(12) **FASCICULE DE BREVET EUROPEEN**

(45) Date de publication et mention
de la délivrance du brevet:
**19.05.2010   Bulletin 2010/20**

(51) Int Cl.:
*G01C 23/00* *(2006.01)*    *G01K 1/04* *(2006.01)*

(21) Numéro de dépôt: **05290049.5**

(22) Date de dépôt: **10.01.2005**

(54) **Procédé et dispositif de vérification d'une valeur de température à une altitude de destination d'un aéronef**

Verfahren und Vorrichtung zur Überprüfung eines Temperaturwerts bei einer Zielhöhe eines Flugzeugs

Method and device for checking a temperature value at a destination altitude of an aircraft

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.02.2004   FR 0401102**

(43) Date de publication de la demande:
**10.08.2005   Bulletin 2005/32**

(73) Titulaire: **AIRBUS OPERATIONS (SAS)**
**31060 Toulouse (FR)**

(72) Inventeurs:
• **Rouquette, Patrice**
**12740 Sebazac (FR)**
• **Markiton, Vincent**
**31600 Seysses (FR)**

(74) Mandataire: **Hauer, Bernard**
**Bloch & Bonnétat**
**23bis, rue de Turin**
**75008 Paris (FR)**

(56) Documents cités:
**GB-A- 2 169 572    GB-A- 2 179 613**
**US-A- 3 616 691**

**Description**

La présente invention concerne un procédé et un dispositif de vérification d'une valeur de température correspondant à la température à une altitude de destination d'un aéronef, ainsi qu'un système de gestion de vol comportant un tel dispositif.

Le document GB-A-2 169 572 décrit un système permettant de connaître la marge du couple moteur sur la base du poids de carburant, de l'altitude et de la température.

On sait qu'un système de gestion de vol, par exemple de type FMS ("Flight Management System" en anglais), comporte notamment :

- des moyens permettant à un opérateur, en particulier un pilote de l'aéronef, d'entrer au moins une valeur de température, et notamment la valeur de la température à la destination envisagée de l'aéronef, qui lui est fournie par la tour de contrôle de l'aéroport de destination ; et
- une unité centrale qui est susceptible de corriger au moins une valeur d'altitude, en tenant compte de la valeur de température entrée. L'altitude ainsi corrigée peut notamment être utilisée pour calculer la déviation verticale effective de l'aéronef par rapport à une trajectoire de vol prescrite.

Dans un tel cas, une erreur du pilote dans la saisie de la température à destination, engendre une erreur dans le calcul (ou la correction) de l'altitude de l'aéronef, et ainsi de sa déviation verticale par rapport à la trajectoire de vol prescrite, ce qui peut bien entendu avoir des conséquences très graves, notamment lorsque l'aéronef vole à basse altitude.

La présente invention a pour objet de remédier à une erreur de saisie d'un pilote conduisant à un guidage vertical erroné d'un aéronef. Elle concerne un procédé permettant de vérifier une première valeur de température entrée par un pilote et correspondant à la température à une altitude de destination d'un aéronef.

A cet effet, ledit procédé est remarquable, selon l'invention, en ce que :

a) on mesure une température dynamique à l'extérieur de l'aéronef, à l'altitude actuelle dudit aéronef ;
b) on détermine une température statique au niveau de l'aéronef, à l'aide de ladite température dynamique ;
c) on détermine, à l'aide de ladite température statique et d'une relation de thermodynamique, une seconde valeur de température correspondant à une température estimée à ladite altitude de destination ;
d) on détermine la différence entre lesdites première et seconde valeurs de température ; et
e) si ladite différence est supérieure à une valeur prédéterminée, par exemple 10°C, on émet un signal d'alerte.

Ainsi, grâce à l'invention, on dispose d'un procédé permettant de vérifier de façon rapide et précise une valeur de température, en particulier une température à une altitude de destination entrée par un pilote dans un système de gestion de vol.

De façon avantageuse, à l'étape b), on détermine ladite température statique Tr1 à l'aide de la relation suivante :

$$Tr1 = Tr \,/\, (1 + (0,2.Kr.M^2))$$

dans laquelle :

- Tr représente la température dynamique mesurée ;
- Kr représente un coefficient ; et
- M représente le nombre de Mach.

En outre, avantageusement, à l'étape c), on détermine ladite seconde valeur de température Tr2, à l'aide de la relation de thermodynamique suivante :

$$Tr2 = Tstd2 . \left( \frac{Tr1}{Tstd1} \right)$$

dans laquelle :

- Tr1 représente ladite température statique à l'altitude actuelle de l'aéronef ;
- Tstd1 représente la température standard à ladite altitude actuelle de l'aéronef, c'est-à-dire à l'altitude à laquelle a été mesurée la température dynamique (étape a) ; et
- Tstd2 représente la température standard à l'altitude de destination.

Dans ce cas, de façon avantageuse :

- on détermine ladite température standard Tstd1 à l'aide de la relation suivante :

$$Tstd1 = 288 - (LO.H1)$$

dans laquelle :

■ LO est un coefficient ; et
■ H1 est l'altitude actuelle de l'aéronef ; et/ou

- on détermine ladite température standard Tstd2 à l'aide de la relation suivante :

$$Tstd2 = 288 - (LO.H2)$$

dans laquelle :

- LO est un coefficient ; et
- H2 est ladite altitude de destination.

La présente invention concerne également un dispositif de vérification d'une première valeur de température correspondant à la température à une altitude de destination d'un aéronef.

Selon l'invention, ledit dispositif est remarquable en ce qu'il comporte :

- un moyen pour mesurer une température dynamique à l'extérieur de l'aéronef ;
- un moyen pour déterminer une température statique au niveau de l'aéronef, à l'aide de ladite température dynamique ;
- un moyen pour déterminer, à l'aide de ladite température statique et d'une relation de thermodynamique, une seconde valeur de température correspondant à une température estimée à ladite altitude de destination ;
- un moyen pour déterminer la différence entre lesdites première et seconde valeurs de température ; et
- un moyen pour émettre un signal d'alerte, lorsque ladite différence est supérieure à une valeur prédéterminée.

Par ailleurs, la présente invention concerne également un système de gestion de vol d'un aéronef, du type comportant au moins :

- des moyens permettant à un opérateur d'entrer au moins une valeur de température ; et
- une unité centrale qui corrige au moins une valeur d'altitude, au moins à l'aide d'une valeur de température entrée.

Selon l'invention, ledit système de gestion de vol est remarquable en ce qu'il comporte, de plus, un dispositif tel que celui précité, et en ce que ledit dispositif est déclenché automatiquement, lorsqu'une valeur de température est entrée par un opérateur, de manière à vérifier cette valeur de température.

Ainsi, grâce à l'invention, la vérification d'une valeur de température entrée par un opérateur, en particulier un pilote de l'aéronef, est mise en oeuvre automatiquement, dès que la saisie est réalisée. On obtient donc une surveillance efficace et automatique des valeurs de température entrées.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est le schéma synoptique d'un système de gestion de vol d'un aéronef, conforme à l'invention et comportant un dispositif tel que celui représenté sur la figure 1.

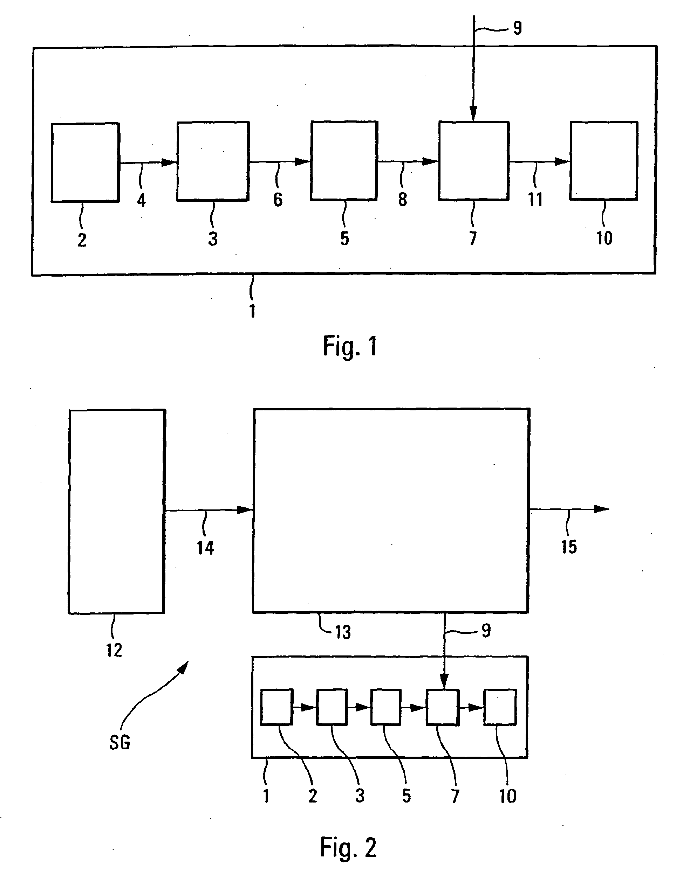

Le dispositif 1 conforme à l'invention et représenté schématiquement sur la figure 1, est destiné à vérifier une valeur de température T1 entrée par un pilote et correspondant à la température à une altitude de destination d'un aéronef.

Selon l'invention, ledit dispositif 1 comporte :

- un moyen usuel 2 pour mesurer la température dynamique à l'extérieur de l'aéronef, à la position et à l'altitude actuelles dudit aéronef ;
- un moyen 3 qui est relié par une liaison 4 audit moyen 2, pour déterminer la température statique Tr1 au niveau de l'aéronef (c'est-à-dire à l'altitude actuelle de l'aéronef), à l'aide de la température dynamique reçue dudit moyen 2 ;
- un moyen 5 pour déterminer, à l'aide de ladite température statique Tr1 reçue par une liaison 6 et d'une relation de thermodynamique intégrée et précisée ci-dessous, une valeur de température Tr2 correspondant à une température estimée à ladite altitude de destination ;
- un moyen 7, qui reçoit ladite valeur de température Tr2 par l'intermédiaire d'une liaison 8 et ladite valeur de température T1 qui doit être vérifiée à l'aide d'une liaison 9, et qui détermine la différence entre lesdites valeurs de température Tr2 et T1 ; et
- un moyen 10 qui est relié par une liaison 11 audit moyen 7, pour émettre un signal d'alarme, lorsque ladite différence est supérieure à une valeur prédéterminée, par exemple X°C.

De plus, selon l'invention, ledit moyen 3 détermine ladite température statique Tr1 à l'aide de la relation suivante :

$$Tr1 = Tr / (1 + (0,2.Kr.M²))$$

dans laquelle :

- Tr représente ladite température dynamique, exprimée en °C et mesurée par une sonde usuelle de l'aéronef ;
- Kr représente un coefficient, à savoir un coefficient de récupération de la sonde, défini par le fabricant de ladite sonde ; et
- M représente le nombre de Mach de l'aéronef.

En outre, ledit moyen 5 détermine ladite valeur de température Tr2, à l'aide de la relation de thermodynamique suivante :

$$Tr2 = Tstd2.\left(\frac{Tr1}{Tstd1}\right)$$

dans laquelle :

- Tstd1 représente la température standard à ladite altitude actuelle de l'aéronef, c'est-à-dire à l'altitude à laquelle le moyen 2 a mesuré la température dynamique ; et
- Tstd2 représente la température standard à l'altitude de destination, c'est-à-dire à l'altitude de l'aéroport où l'aéronef compte atterrir.

Pour ce faire, ledit moyen 5 détermine auparavant ladite température standard Tstd1, à l'aide de la relation suivante :

$$Tstd1 = 288 - (LO.H1)$$

dans laquelle :

- LO est un coefficient ; et
- H1 est l'altitude actuelle de l'aéronef.

Lorsque Tstd1 est exprimé en degrés Kelvin et H1 en mètres, le coefficient LO peut être égal à 0,00198°/pied (c'est-à-dire à environ 0,0065 °/mètre).

De plus, ledit moyen 5 détermine ladite température standard Tstd2, à l'aide de la relation suivante :

$$Tstd2 = 288 - (LO.H2)$$

dans laquelle :

- LO est un coefficient ; et
- H2 est ladite altitude de destination.

Lorsque Tstd2 est exprimé en degrés Kelvin et H2 en mètres, ledit coefficient LO peut également être égal à 0,00198°/pied (c'est-à-dire à environ 0,0065°/mètre).

Par ailleurs, ledit moyen 10 peut émettre, de façon usuelle, un signal d'alerte visuel et/ou un signal d'alerte sonore.

Dans une application préférée du dispositif 1 conforme à l'invention, ce dernier fait partie d'un système de gestion de vol usuel SG qui comporte, comme représenté sur la figure 2, au moins :

- des moyens 12, par exemple un clavier et/ou une souris d'ordinateur, permettant à un opérateur, en particulier un pilote de l'aéronef, d'entrer des données, et au moins une valeur de température ; et
- une unité centrale 13 qui est reliée par une liaison 14 auxdits moyens 12 et qui permet de calculer des paramètres particuliers, notamment en utilisant des données entrées par un opérateur à l'aide desdits moyens 12.

L'unité centrale 13 peut transmettre les paramètres ainsi calculés à un dispositif utilisateur non représenté, par l'intermédiaire d'une liaison 15.

En particulier, ladite unité centrale 13 est en mesure de corriger une valeur d'altitude de l'aéronef, au moins à l'aide d'une valeur de température entrée par un pilote, et notamment de la température à destination. Cette température à destination représente la température à l'aéroport de destination, qui est fournie au pilote par la tour de contrôle de cet aéroport de destination.

Selon l'invention, le dispositif 1 fait donc partie dudit système de gestion de vol SG et il est formé de manière à être déclenché automatiquement, lorsqu'un pilote entre une valeur de température à l'aide des moyens 12 dans l'unité centrale 13.

Ainsi, lorsque le système de gestion de vol SG est utilisé pour corriger l'altitude de l'aéronef à l'aide d'une température à destination entrée par le pilote, cette température à destination est vérifiée automatiquement par le dispositif 1, et un signal d'alerte est émis si elle est erronée. Aussi, seules des valeurs exactes (à une marge près) de la température à destination sont utilisées par le système de gestion de vol SG pour corriger l'altitude de l'aéronef de sorte que cette altitude corrigée présente alors toujours une exactitude suffisante. Ceci est également vrai le cas échéant pour une déviation verticale de l'aéronef par rapport à une trajectoire de vol prescrite, qui est calculée de façon usuelle par le système de gestion de vol SG à l'aide de la valeur d'altitude ainsi corrigée.

**Revendications**

1. Procédé de vérification d'une première valeur de température correspondant à la température à une altitude de destination d'un aéronef, **caractérisé en ce que** :

   a) on mesure une température dynamique à l'extérieur de l'aéronef, à l'altitude actuelle dudit aéronef ;
   b) on détermine une température statique au niveau de l'aéronef, à l'aide de ladite température dynamique ;
   c) on détermine, à l'aide de ladite température statique et d'une relation de thermodynamique, une seconde valeur de température correspondant à une température estimée à ladite altitude de destination ;
   d) on détermine la différence entre lesdites première et seconde valeurs de température ; et

e) si ladite différence est supérieure à une valeur prédéterminée, on émet un signal d'alerte.

2. Procédé selon la revendication 1, **caractérisé en ce qu'**à l'étape b), on détermine ladite température statique Tr1 à l'aide de la relation suivante :

$$Tr1 = Tr / (1 + (0,2 . Kr . M^2))$$

dans laquelle :

- Tr représente la température dynamique mesurée ;
- Kr représente un coefficient ; et
- M représente le nombre de Mach.

3. Procédé selon l'une des revendications 1 et 2, **caractérisé en ce qu'**à l'étape c), on détermine ladite seconde valeur de température Tr2, à l'aide de la relation de thermodynamique suivante :

$$Tr2 = Tstd2 . \left( \frac{Tr1}{Tstd1} \right)$$

dans laquelle :

- Tr1 représente ladite température statique à l'altitude actuelle de l'aéronef ;
- Tstd1 représente la température standard à ladite altitude actuelle de l'aéronef ; et
- Tstd2 représente la température standard à l'altitude de destination.

4. Procédé selon la revendication 3, **caractérisé en ce que** l'on détermine ladite température standard Tstd1 à l'aide de la relation suivante :

$$Tstd1 = 288 - (LO . H1)$$

dans laquelle :

- LO est un coefficient ; et
- H1 est l'altitude actuelle de l'aéronef.

5. Procédé selon l'une des revendications 3 et 4, **caractérisé en ce que** l'on détermine ladite température standard Tstd2 à l'aide de la relation suivante :

$$Tstd2 = 288 - (LO . H2)$$

dans laquelle :

- LO est un coefficient ; et
- H2 est ladite altitude de destination.

6. Procédé selon l'une des revendications précédentes, **caractérisé en ce que** ladite valeur prédéterminée utilisée à l'étape e) vaut sensiblement 10°C.

7. Dispositif de vérification d'une première valeur de température correspondant à la température à une altitude de destination d'un aéronef, **caractérisé en ce qu'**il comporte :

- un moyen (2) pour mesurer une température dynamique à l'extérieur de l'aéronef ;
- un moyen (3) pour déterminer une température statique au niveau de l'aéronef, à l'aide de ladite température dynamique ;
- un moyen (5) pour déterminer, à l'aide de ladite température statique et d'une relation de thermodynamique, une seconde valeur de température correspondant à une température estimée à ladite altitude de destination ;
- un moyen (7) pour déterminer la différence entre lesdites première et seconde valeurs de température ; et
- un moyen (10) pour émettre un signal d'alerte, lorsque ladite différence est supérieure à une valeur prédéterminée.

8. Système de gestion de vol d'un aéronef, comportant au moins :

- des moyens (12) permettant à un opérateur d'entrer au moins une valeur de température ; et
- une unité centrale (13) qui corrige au moins une valeur d'altitude, au moins à l'aide d'une valeur de température entrée,

**caractérisé en ce qu'**il comporte, de plus, un dispositif (1) tel que celui spécifié sous la revendication 7, et **en ce que** ledit dispositif (1) est déclenché automatiquement, lorsqu'une valeur de température est entrée par un opérateur, de manière à vérifier cette valeur de température.

9. Aéronef, **caractérisé en ce qu'**il comporte un système (SG) tel que celui spécifié sous la revendication 8.

10. Aéronef, **caractérisé en ce qu'**il comporte un dispositif (1) tel que celui spécifié sous la revendication 7.

11. Aéronef, **caractérisé en ce qu'**il comporte un dispositif (1) susceptible de mettre en oeuvre le procédé spécifié sous l'une quelconque des revendications 1 à 6.

## Claims

1. A method of verifying a first temperature value corresponding to the temperature at a destination altitude of an aircraft, **characterized in that**:

   a) a dynamic temperature on the outside of the aircraft, at the actual altitude of said aircraft, is measured;
   b) a static temperature around the aircraft is determined using said dynamic temperature;
   c) a second temperature value corresponding to an estimated temperature at said destination altitude is determined using said static temperature and a thermodynamic equation;
   d) the difference between said first and second temperature values is determined; and
   e) if said difference is greater than a predetermined value a warning signal is emitted.

2. The method as claimed in claim 1, **characterized in that**, in step b), said static temperature $T_{r1}$ is determined using the following equation:

$$T_{r1} = T_r/[1 + (0.2K_rM^2)]$$

   in which:

   - $T_r$ represents the measured dynamic temperature;
   - $K_r$ represents a coefficient; and
   - M represents the Mach number.

3. The method as claimed in one of claims 1 and 2, **characterized in that**, in step c), said second temperature value $T_{r2}$ is determined using the following thermodynamic equation:

$$T_{r2} = T_{std2}(T_{r1}/T_{std1})$$

   in which:

   - $T_{r1}$ represents said static temperature at the actual altitude of the aircraft;
   - $T_{std1}$ represents the standard temperature at said actual altitude of the aircraft; and
   - $T_{std2}$ represents the standard temperature at the destination altitude.

4. The method as claimed in claim 3, **characterized in that** said standard temperature $T_{std1}$ is determined using the following equation:

$$T_{std1} = 288 - (L_0H_1)$$

   in which:

   . $L_0$ is a coefficient; and
   . $H_1$ is the actual altitude of the aircraft.

5. The method as claimed in one of claims 3 and 4, **characterized in that** said standard temperature $T_{std2}$ is determined using the following equation:

$$T_{std2} = 288 - (L_0H_2)$$

   in which:

   . $L_0$ is a coefficient; and
   . $H_2$ is said destination altitude.

6. The method as claimed in any one of the precedent claims, **characterized in that** said predetermined value used in step e) is substantially equal to 10°C.

7. A device for verifying a first temperature value corresponding to the temperature at a destination altitude of an aircraft, **characterized in that** it comprises:

   - a means (2) for measuring a dynamic temperature on the outside of the aircraft;
   - a means (3) for determining a static temperature around the aircraft using said dynamic temperature;
   - a means (5) for determining a second temperature value, corresponding to an estimated temperature at said destination altitude, using said static temperature and a thermodynamic equation;
   - a means (7) for determining the difference between said first and second temperature values; and
   - a means (10) for emitting a warning signal when said difference is greater than a predetermined value.

8. A flight management system of an aircraft, comprising at least:

   - means (12) allowing an operator to input at least one temperature value; and

- a central processing unit (13) that corrects at least one altitude value, at least using an input temperature value,

**characterized in that** it also comprises a device (1) such as that specified in claim 7, and **in that** said device (1) is automatically triggered when a temperature value is input by an operator, so as to verify this temperature value.

9. An aircraft,
   **characterized in that** it includes a system (SG) such as the one specified in claim 8.

10. An aircraft,
    **characterized in that** it includes a device (1) such as the one specified in claim 7.

11. An aircraft,
    **characterized in that** it includes a device (1) capable of implementing the method specified in any one of claims 1 to 6.


**Patentansprüche**

1. Verfahren zur Überprüfung eines ersten Temperaturwertes, welcher der Temperatur auf einer Zielhöhe eines Luftfahrzeugs entspricht,
   **gekennzeichnet durch** folgende Schritte:

   a) Messen einer dynamischen Temperatur außerhalb des Luftfahrzeugs auf der derzeitigen Höhe des Luftfahrzeugs;
   b) Bestimmen einer statischen Temperatur am Luftfahrzeug anhand der dynamischen Temperatur;
   c) Bestimmen anhand der statischen Temperatur und einer thermodynamischen Relation eines zweiten Temperaturwertes, der einer Temperatur entspricht, die auf der Zielhöhe geschätzt wird;
   d) Bestimmen des Unterschiedes zwischen den ersten und zweiten Temperaturwerten; und
   e) wenn der Unterschied größer als ein vorherbestimmter Wert ist, Ausgeben eines Warnsignals.

2. Verfahren nach Anspruch 1,
   **dadurch gekennzeichnet, dass** in Schritt b) die statische Temperatur Tr1 anhand der folgenden Relation bestimmt wird:

$$Tr1 = Tr / (1 + (0,2.Kr.M^2)),$$

wobei:

- Tr die gemessene dynamische Temperatur ist;
- Kr ein Koeffizient ist; und
- M die Machzahl ist.

3. Verfahren nach einem der Ansprüche 1 und 2,
   **dadurch gekennzeichnet, dass** in Schritt c) der zweite Temperaturwert Tr2 anhand der folgenden thermodynamischen Relation bestimmt wird:

$$Tr2 = Tstd2 . \left( \frac{Tr1}{Tstd1} \right)$$

wobei:

   - Tr1 die statische Temperatur auf der derzeitigen Höhe des Luftfahrzeugs ist;
   - Tstd1 die Standardtemperatur auf der derzeitigen Höhe des Luftfahrzeugs ist; und
   - Tstd2 die Standardtemperatur auf der Zielhöhe ist.

4. Verfahren nach Anspruch 3,
   **dadurch gekennzeichnet, dass** die Standardtemperatur Tstd1 anhand der folgenden Relation bestimmt wird:

$$Tstd1 = 288 - (LO.H1),$$

wobei:

   - LO ein Koeffizient ist; und
   - H1 die derzeitige Höhe des Luftfahrzeugs ist.

5. Verfahren nach einem der Ansprüche 3 und 4,
   **dadurch gekennzeichnet, dass** die Standardtemperatur Tstd2 anhand der folgenden Relation bestimmt wird:

$$Tstd2 = 288 - (LO.H2),$$

wobei:

   - LO ein Koeffizient ist; und
   - H2 die Zielhöhe ist.

6. Verfahren nach einem der vorhergehenden Ansprüche,
   **dadurch gekennzeichnet, dass** der vorherbestimmte Wert, der in Schritt e) verwendet wird, im Wesentlichen gleich 10 °C ist.

7. Vorrichtung zum Überprüfen eines ersten Temperaturwertes, welcher der Temperatur auf einer Zielhöhe eines Luftfahrzeugs entspricht, **dadurch gekennzeichnet, dass** sie folgendes umfasst:

- ein Mittel (2) zum Messen einer dynamischen Temperatur außerhalb des Luftfahrzeugs;
- ein Mittel (3) zum Bestimmen einer statischen Temperatur am Luftfahrzeug anhand der dynamischen Temperatur;
- ein Mittel (5) zum Bestimmen anhand der statischen Temperatur und einer thermodynamischen Relation eines zweiten Temperaturwertes, der einer Temperatur entspricht, die auf der Zielhöhe geschätzt wird;
- ein Mittel (7) zum Bestimmen des Unterschieds zwischen den ersten und zweiten Temperaturwerten; und
- ein Mittel (10) zum Ausgeben eines Warnsignals, wenn der Unterschied größer als ein vorherbestimmter Wert ist.

8. Flugmanagementsystem eines Luftfahrzeugs, umfassend mindestens:

- Mittel (12), die es einem Bediener ermöglichen, mindestens einen Temperaturwert einzugeben; und
- eine Zentraleinheit (13), die mindestens einen Höhenwert mindestens anhand eines eingegebenen Temperaturwertes korrigiert,

**dadurch gekennzeichnet, dass** es zudem eine Vorrichtung (1) nach Anspruch 7 umfasst, und dass die Vorrichtung (1) automatisch ausgelöst wird, wenn ein Temperaturwert von einem Bediener eingegeben wird, um diesen Temperaturwert zu überprüfen.

9. Luftfahrzeug,
**dadurch gekennzeichnet, dass** es ein System (SG) nach Anspruch 8 umfasst.

10. Luftfahrzeug,
**dadurch gekennzeichnet, dass** es eine Vorrichtung (1) nach Anspruch 7 umfasst.

11. Luftfahrzeug,
**dadurch gekennzeichnet, dass** es eine Vorrichtung (1) umfasst, die dazu geeignet ist, das Verfahren nach einem der Ansprüche 1 bis 6 umzusetzen.

Fig. 1

Fig. 2

**RÉFÉRENCES CITÉES DANS LA DESCRIPTION**

**Documents brevets cités dans la description**

- GB 2169572 A